# EUROPEAN PATENT APPLICATION

(11) **EP 1 873 643 A1**
(43) Date of publication of application: **02.01.2008**
(21) Application number: 06116367.1
(22) Date of filing: 30.06.2006
(51) Int. Cl.: G06F 11/14, G06F 9/46

(54) **Service objects with rollback-recovery**

(71) Applicant: Alcatel Lucent, 75008 Paris (FR)
(72) Inventor: Szabo, Peter, D-75180, Pforzheim (DE); Rössler, Horst, D-70794, Filderstadt (DE); Hoche, Michael, D-88090, Immenstaad (DE)
(74) Representative: Rausch, Gabriele

(57) **Abstract**

This invention relates to a computer software product that comprises service objects (SO1, S02), the service objects are adapted to communicate via messages through a communication platform (P) providing a communication protocol, where the communication platform comprising logging means (EL) for logging a service object history by logging an communication event or a service object state or a state change or a service object interaction, and where the communication platform (P) comprising control means (CP) for rollback service objects histories consistently by propagating a rollback of a service object to rollback affected service objects until a consistent state is reached. The invention also relates to a server host, a distributed system, and a method for synchronizing service objects.

## Description

This invention relates to a computer software product comprising service objects with consistent rollback. The invention also relates to a server host, a distributed system, and a method for synchronizing service objects.

The term Service-Oriented Architecture (SOA) expresses an approach to software architecture that supports integrating by composing a set of linked, repeatable tasks, called services. Services are self-contained, reusable software modules with well-defined interfaces and are independent of applications and the computing platforms on which they run. SOA helps to build composite applications, which are applications that draw upon functionality from multiple sources. SOA helps to innovate by ensuring that systems can adapt quickly, easily and economically to support rapidly changing needs. SOA is usually based on a set of (W3C) Web services standards (e.g., using SOAP, UDDI or REST). These standards have resulted in greater interoperability and avoidance of vendor lock-in. However, one can implement SOA using any service-based technology.

SOA is a style of architecture that enables the creation of applications that are built by combining loosely coupled and interoperable services. These services interoperate based on a formal definition (or contract) which is independent from the underlying platform and programming language. The interface definition encapsulates (hides) the language-specific service implementation. The software components become very reusable because the interface is standards-compliant and advertised using UDDI (e.g. web service description language (WSDL)) and is independent from the underlying implementation.

SOA can support integration and consolidation activities within complex systems.

High-level languages such as BPEL and specifications such as WS-Coordination extend the service concept further by providing a method of defining and supporting orchestration of fine grained services into coarser grained services, which in turn can be incorporated into workflows and business processes implemented in composite applications.

Due to the inherent stateless nature of most of the communication protocols like (e.g. hyper text transfer protocol (http)), Web technologies suffer from the problem of state information being forgotten between two successive interactions. An interactive Web application for instance consists of a collection of e.g. scripts, i.e. services, wherein a single interaction comprises one script delivering a page to the browser (then ending), the user completing and submitting the form at some later point in time, and another (possibly different) script handling the submitted form. Thus, application logic is spread across a multitude of scripts.

A continuations-based alternative is known that can simplify the development of complex Web applications, see e.g. http://www-128.ibm.com/developerworks/library/j-contin.html. There, it is suggested to save a context in a continuation passing style (CPS). Instead of "returning" values as in the more familiar direct style, a function written in CPS takes an explicit continuation argument which is meant to receive the result of the computation performed within the function. When a subroutine is invoked within a CPS function, the calling function is required to supply a procedure to be invoked with the subroutine's "return" value, see e.g.
http://en.wikipedia.org/wiki/Continuation_passing_style.

This kind of technique combined with Ajax, a shorthand for Asynchronous JavaScript and XML, is a Web development technique for creating interactive web applications.

The intent is to make web pages feel more responsive by exchanging small amounts of data with the server behind the scenes, so that the entire web page does not have to be reloaded each time the user makes a change. This is meant to increase the web page's interactivity, speed, and usability, but introduces heavy synchronization problems.

In computing, a continuation is a representation of an execution state, i.e. the context, of a program (for example, the call stack) at a certain point in time. Many languages have constructs that allow a programmer to save the current execution state into an object, and then restore the state from this object at a later point in time (thereby resuming its execution). This technique has been used in functional programming, imperative programming, and message passing programming.

In a distributed system like a SOA it is a well known problem to increase integrity and consistency, especially in distributed telecommunication applications like Web applications.

Stephane Ducasse et al. stated on the ESUG Conference 2004 that developing web applications is difficult since the client-server relationship is asymmetric: the server cannot update clients but only responds to client requests and the navigation facilities of web browsers lead to a situation where servers cannot control the state of the clients.

Developers have to work manually around the shortcomings. Some approaches offer better abstractions by composing an application out of components, however they still fail to offer modeling control flow at a high level. Continuation-based approaches solve this problem for multi tier architectures by providing the facilities to model a control flow over several pages with one piece of code. However combining multiple flows inside the same page remains complex.

Continuation based Web development is known as a way to provide stateful applications on the web, which by its nature is stateless. Traditionally, this has been achieved by tracking a single session attached to each user, but this approach had difficulties with the way users interact with the web. By using continuations instead of sessions, many of the difficulties involving things like the back button and session forking simply cease to exist, at least for simple client server relationships.

The known concepts and techniques do not provide transparent synchronization or a clear continuation semantics. A developer has to cease with challenging synchronization problems, that are even sometimes not observable at all.

This problem is solved by a computer program that comprises service objects, where the service objects communicate via messages through a communication platform providing a communication protocol, and where the communication platform comprising logging means for logging a service object history by logging an communication event or a service object state or a state change or a service object interaction, and where the communication platform comprising control means for rollback service objects consistently by propagating a rollback of a service object to rollback affected service objects until a consistent state is reached using the logged histories of the service objects.

The problem is respectively solved by a server host comprising such a computer program and by a distributed system comprising such a server hosts.

And the problem is solved by a method for synchronizing service objects communicating via messages through a communication platform providing a communication protocol, where the method comprising the steps of logging a service object history by logging an communication event or a service object state or a state change or a service object interaction, and rollback service objects histories consistently by propagating a rollback of a service object to rollback affected service objects until a consistent state is reached.

In other words starting from a page centric approach with client- and server-side nested objects using technologies like Java applets and Servlets lack to provide per default object synchronization. The solution is to maintain a history of interface interactions, like in an undo/redo strategy that is built for a recovery, i.e. a backtracking step which is here called rollback, in such a way, that the "last" processing (computation) history can be reconstructed. (Note that such a schedule is a dual representation of a state.) The solution is implemented by embedding in a communication platform, e.g. in a protocol like SOAP message passing, a recovery mechanism, that allows to trace back and re-synchronize. Rollback-recovery concepts are reused for an implicit application state maintenance. A side-advantage is that the navigation metaphor of the back-button for any kind of web applications is generalized since the back button corresponds to a rollback of the presentation object, i.e. the shown page.

The realization is regarded as a service oriented architecture comprising intercommunicating service objects. The main idea is that the a platform maintains for each service object O a history, say h(O), of happened (communication or in general boundary) events, i.e. of received messages m(_,O) or sent messages m(O,_). Where the denotation of a message from A to B is m(A,B). The history is ordered by a processing time line (h(O), <_O), that is the history of computation. This time line is assumed for simplicity as a linear order instead of more complex models like partial orders or beyond.

Each time point, i.e. each event e, induces an ideal of histories, i.e. the global history of a whole communication system. An ideal of histories has a set of local (with respect to service object) history for each service object direct or indirect before this event e. Simple spoken, the ideal is the maximal history of processing that just ending at that time point.

A local history could be determined by the following phases: Let e be the event in the timeline of object O
(I) Object O informs another object P about an invalidation of a message m=m(O,P) with m>e.
(II) Each object P that has received an invalidation of a message m informs other object Q about an invalidation of a message m(P,Q) until there are no invalidations anymore
(III) Each object P that has received messages m(Q,P) after an invalidated message m retransmits the message m(Q,P)

A platform providing a rollback mechanism as described above simplifies software design drastically by unburden a developer from re-synchronization problems in a distributed system of service objects. This enhances especially integration and test phases.
Beside that it solves the continuation semantics problem, uniformly and generically for more complex than multi-tier architectures. A wide application especially for Web applications and peer-to-peer platforms.
The performance and the robustness of computer programs is enhanced by applying the invention.
The more complex platform need to be developed only once and could be generically implemented, e.g. provided by a P2P framework. And the logging could be automatically distributed.

The invention is illustrated by the following figures, where
Fig. 1 shows a functional time line of a process according to prior art.
Fig. 2 shows an abstract event history for a service object.
Fig. 3 shows an abstract event history for two communicating service objects.
Fig. 4 shows a service object recovery according to the method according to the invention.
Fig. 5 shows components of a computer software product according to the invention.

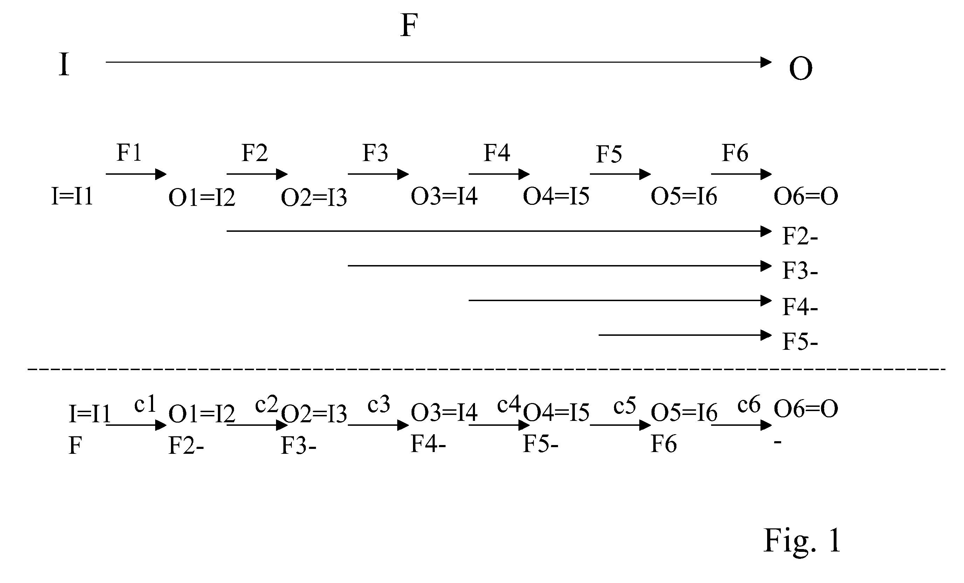

The functional time line shown in Fig. 1 presents the computational aspect of a function F mapping an input I by means of a computation onto an output O. This mapping is as usual decomposed into several (atomic) parts, that are a kind primitive functions F1, ..., F6. The input I=I1 is feed into the first primitive function, the computation yields an first output O1 =I2, that is feed in the second function F2. The output O2=I3 of the second function F2 is the input of the third function F3; and so on. Finally the output 06=O of the last primitive function F6 is the output O of the whole computation.

Below the dashed line a continuation style computation is shown, that also computes the function F as a chain of continuation functions c1, ..., c6. To avoid keeping a state while computing a function the tail of the computation F2-, ..., F6- is passed through consecutive continuation functions c1, ..., c6. I.e. the remaining passed computation between the i-th and the (i+1)-th continuation function c(i) and c(i+1) is the remaining part of the function F(i+1). This allows explicitly to pass with a computational result Oi also a description of the remaining computation.

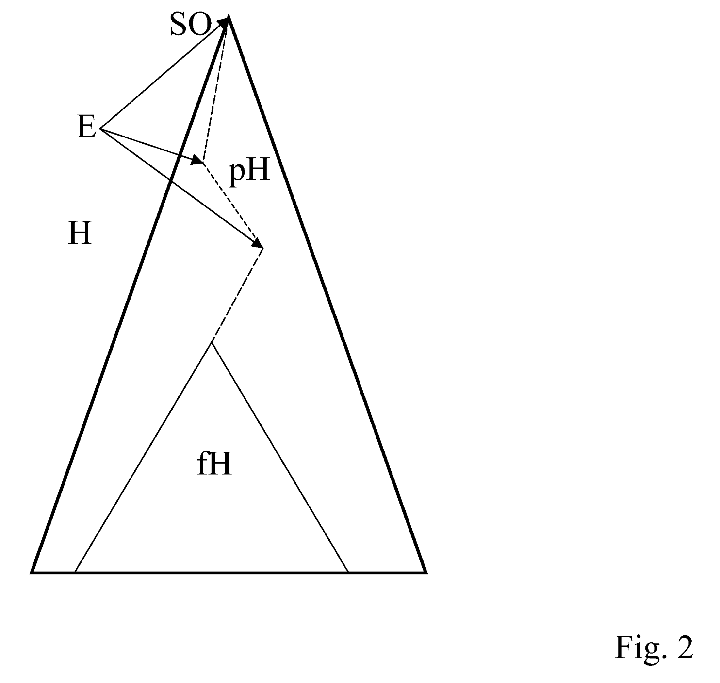

Fig. 2 shows an abstract history H (the large triangle) of a service object SO. A concrete concept of history can for instance be found in V. Pratt's paper on Higher Dimensional Automata, Jan, 2005. This history H consists of events E ordered in (some) time, e.g. in logical time as defined by Lamport elsewhere. There is a past history pH shown as a dashed zigzag line, consisting of three events E, the first initial event , a middle and the last event in that past history pH. Where the past history ends the future history fH starts, shown by the small triangle. The future history corresponds to a program controlled schedule of (possible) events, as the history H of the service object per se does.

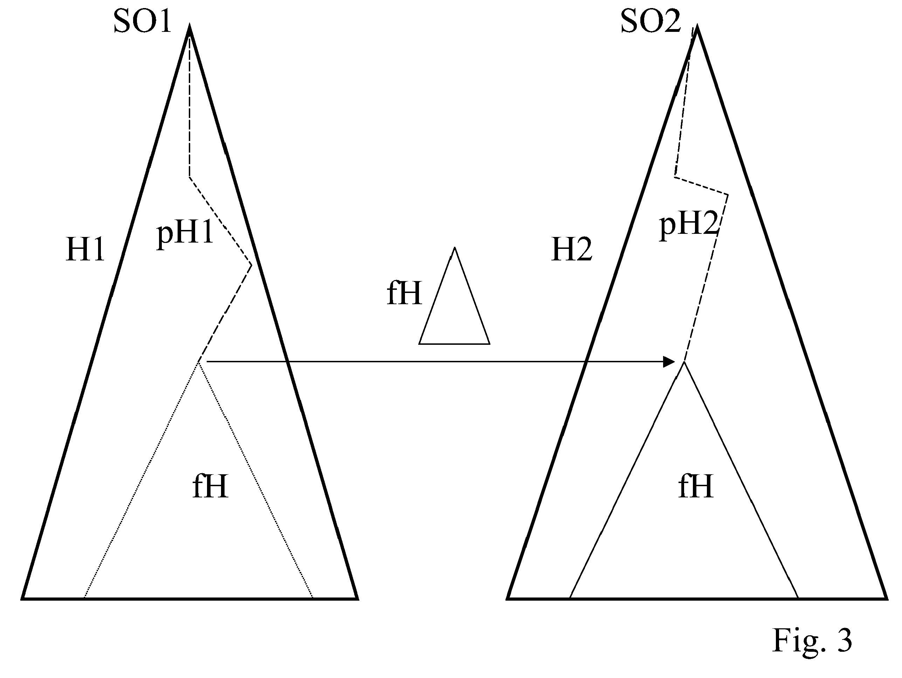

Fig. 3 shows how such a partial history is communicated between two service objects as a continuation. A first service object SO1 having a first history H1 passes at a certain time when a first past history pH1 has passed a description of a future history fH as described above. This is received by a second service object S02 that continues its past history pH2 of its second history H2 with the passed future history fH.

The future history fH has to cope with all eventualities when something goes wrong but allows to keep track of computation in the case of two communicating parties. But in the case of a non-multi tier communication the thing becomes difficult.

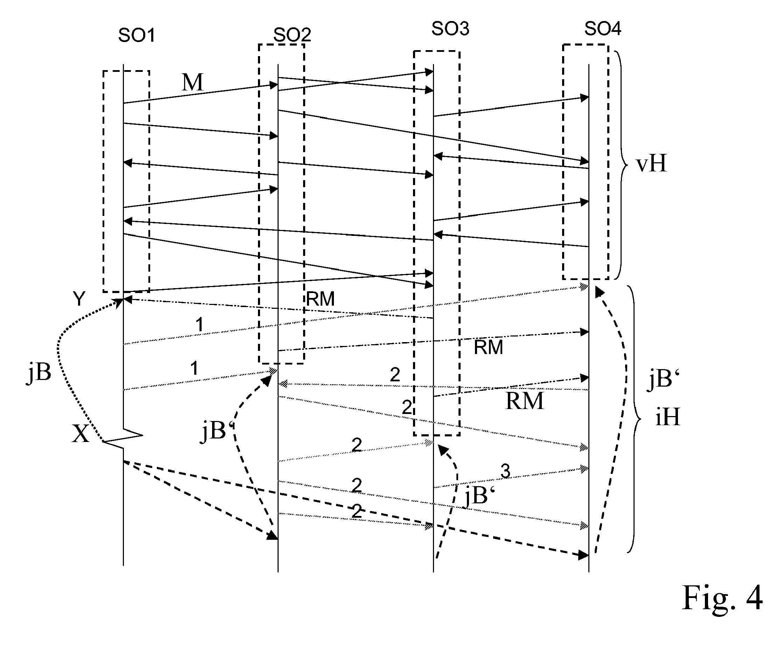

A way out of this dilemma is shown in Fig. 4. There the histories of communication service objects SO1, ..., S04 are depicted as lines of a sequence chart. Time is assumed to advance as in the previous figures from top to down. The service objects SO1, ..., SO4 exchange messages M shown by the arrows connecting the vertical time lines.

Suppose something happens with a first service object SO1 at time X, shown by the zigzag in the time line. This requires a backtrack jB at a previous point Y in the time line. This is shown by the dotted arrow. This backtrack invalidates associated histories of the other service objects SO2, ..., SO4. These objects need to be informed about the backtrack jB to the previous point Y for resynchronization. The service object system needs to be recovered, i.e. the valid computational histories vH need to be identified.

This is done in two steps, a first one where the histories are iteratively invalidated and a second step. Fig. 4 illustrates these steps by means of an example showing pathological cases. The part of the history between the time X and the previous point Y has become an invalid history iH. The messages 1 communicated in this invalid history became also invalid. That induces invalid histories at the communication partners, here the second service object S02 and the fourth service object SO 4. These object have recursively perform a backtrack Bj', inducing further invalid histories at the communication partners by logged message exchange 2, ... and recursively further invalid histories until no invalidation occurs and a fix point is reached. Then in a second step the messages that are delivered in a valid history but have received in a time interval that has been invalidated are re-injected into the system as shown by the dashed dotted arrows labeled RM.

After this procedure each of the service objects can recomputed in a synchronized system and advance in computation.

As already described above and stated in "Inverting back the inversion of control or, Continuations versus page-centric programming", Christian Queinnec, a continuation is a program-level manageable value representing the rest of the computation of the program. "What to do next" is precisely what has to be explicitly encoded in order to program non trivial web interactions. Continuations allow web applications to be written in direct style that is, as a single program that displays forms and reads form submission since continuations automatically capture everything (control point, lexical bindings, etc.) that is needed to resume the computation. A web application that involves a sequence of interactions with a client (displaying pages and waiting for filled forms) is currently difficult to program because: the client's state in the sequence of interactions may be overwhelmingly complex to encode and maintain, the "Back" and "Clone" capacities of the client's browser may be exercised so that the server may observe multiple (and even concurrent) submissions to already submitted forms.

It should be noted that the communications shown in Fig. 4 could even comprise descriptions of continuations. A nice side effect of the described technique is that the initiation event for a backtrack could also be the back button. Thus the claimed method solves also the back button problem for complex web applications.

Application protocols like SOAP do not support rollback a common state. This is usually resolved by application logic or by a self-designed error handler.

Dedicated recovery points for web applications when a communication between participating objects is initialized shorten the failure history and avoids increased domino effects.

Furthermore the objects could learn the reliability of communication partner objects such that a recovery point density could be handled appropriately, i.e. for n-reliable objects only every n^{th} communication is logged and for unreliable objects (e.g. human beings, interaction) each and every message.

For web applications incremental state savings are advantageous, i.e. whenever reliable (acknowledges) knowledge is gathered while running, a recovery point is created and propagated through the distributed system.

Distributed systems today are ubiquitous and enable many applications, including client-server systems, transaction processing, World Wide Web, and scientific computing, among many others. The vast computing potential of these systems is often hampered by their susceptibility to failures. Therefore, many techniques have been developed to add reliability and high availability to distributed systems. These techniques include transactions, group communications and rollback recovery, and have different tradeoffs and focuses.

The described rollback recovery treats a distributed system as a collection of service objects that communicate through a network. Fault tolerance is achieved by periodically using stable storage to save the service objects' states during failure free execution. Upon a failure, a failed process restarts from one of its checkpoints, thereby reducing the amount of lost computation.

A system may rely on the service object to decide when and what to save on stable storage. Or, it may provide the application programmer with linguistic or protocol constructs to structure the application. The focus is on transparent techniques, which do not require any intervention on the part of the application or the programmer.

Multiple techniques are known for rollback recovery even for message passing systems e.g. summarized in A Survey of rollback -Recovery Protocols in message passing systems by E.N. Elnozahy et al. where nearly all enumerated techniques apply at service oriented architectures.

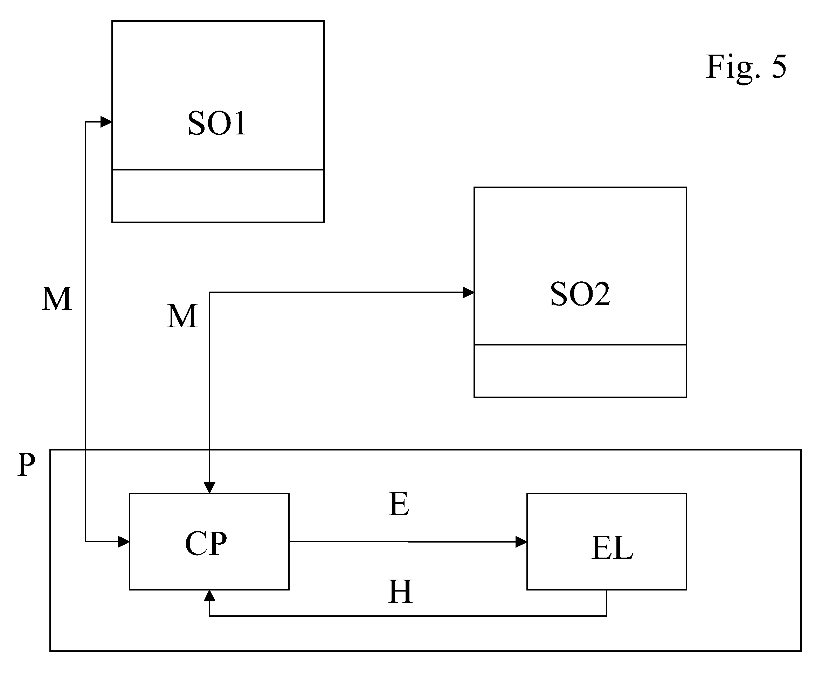

The contribution of this invention comprises a communication platform P, as shown in Fig. 5, that provides an implicit rollback mechanism. This is reached by components CP and EL that are suited for logging and propagating communication information. Messages M that are sent between a first and a second SO1 and S02 object are communicated via this platform P, and especially via a communication platform CP that initiates a transparent logging at boundaries, which is provided by an event logging component EL.

Note that even if the message is stateless communicated the platform is enabled to resynchronize a service object system. It should be further noted that most of the rollback mechanism enumerated in A Survey of rollback - Recovery Protocols in message passing systems, could be implemented distributed using stateless communication protocols.

Such a system automatically takes checkpoints according to some specified policy, and recovers automatically from failures if they occur. This approach has the advantages of relieving the application programmers from the complex and error-prone chores of implementing fault tolerance and of offering fault tolerance to existing applications written without consideration to reliability concerns.

Message-passing systems complicate rollback recovery because messages induce inter-process dependencies during failure-free operation. Upon a failure of one or more processes in a system, these dependencies may force some of the processes that did not fail to rollback, creating what is commonly called rollback propagation.

To see why rollback propagation occurs, consider the situation where a sender of a message m rolls back to a state that precedes the sending of m. The receiver of m must also roll back to a state that precedes m's receipt; otherwise, the states of the two processes would be inconsistent because they would show that message m was received without being sent, which is impossible in any correct failure-free execution. Under some scenarios, rollback propagation may extend back to the initial state of the computation, losing all the work performed before a failure. This situation is known as the domino effect.

The domino effect may occur if each process takes its checkpoints independently - an approach known as independent or uncoordinated checkpointing, which is preferable in service oriented architectures. It is obviously desirable to avoid the domino effect and therefore several techniques have been developed to prevent it. One such technique is to perform coordinated checkpointing in which processes coordinate their checkpoints in order to save a system-wide consistent state. This consistent set of checkpoints can then be used to bound rollback propagation.

Alternatively, communication-induced check pointing forces each process to take checkpoints based on information piggybacked on the application messages it receives from other service objects. Checkpoints are taken such that a system-wide consistent state always exists on stable storage, thereby avoiding the domino effect.

The approaches discussed so far implement checkpoint-based rollback recovery, which relies only on checkpoints to achieve fault-tolerance. In contrast, log-based rollback recovery combines check pointing with logging of nondeterministic events.

Log-based rollback recovery relies on the piecewise deterministic (PWD) assumption, which postulates that all nondeterministic events that a process executes can be identified and that the information necessary to replay each event during recovery can be logged in the event's determinant.

By logging and replaying the nondeterministic events in their exact original order, a process can deterministically recreate its pre-failure state even if this state has not been check pointed. Log-based rollback recovery in general enables a system to recover beyond the most recent set of consistent checkpoints. It is therefore particularly attractive for applications that frequently interact with the outside world, which consists of all input and output devices that cannot roll back.

Comparing different approaches of rollback recovery with respect to a set of properties including the assumption of piecewise determinism, performance overhead, storage overhead, ease of output commit, ease of garbage collection, ease of recovery, freedom from domino effect, freedom from orphan processes, and the extent of rollback, it turns out that the approaches fall into two broad categories: checkpointing protocols and log-based recovery protocols. Checkpointing protocols require the processes to take periodic checkpoints with varying degrees of coordination.

At one end of the spectrum, coordinated checkpointing requires the service objects or the associated runtime environment to coordinate their checkpoints to form global consistent system states. Coordinated checkpointing generally simplifies recovery and garbage collection, and yields good performance in practice. At the other end of the spectrum, uncoordinated checkpointing does not require the service objects to coordinate their checkpoints, but it suffers from potential domino effect, complicates recovery, and still requires coordination to perform output commit or garbage collection. Between these two ends are communication-induced checkpointing schemes that depend on the communication patterns of the applications to trigger checkpoints.

These schemes do not suffer from the domino effect and do not require coordination.

It should further be noted that a system could change the recovery strategy while running depending on the evaluation of the system. Hence if for instance statistically rollbacks occur frequently a denser checkpointing could enhance performance. And a performance measurement could be used to provide a feedback for the recovery strategy.

The following scenario illustrates the concept. Suppose three web services: a synthesis web service, a inference web service, and a analysis web service. The linguistic web service renders a correct sentence from a answering knowledge. The analyzing web service derives from a linguistic sentence a question knowledge representation, and the inference web service is capable of generating answering knowledge from question knowledge. Each web service is implemented as a service object.

Suppose now the inference service object is realized by a ProLog interpreter comprising the following logic basis (denoted in the usual ProLog notation):
subcategory(A,C):-subcategory(A,B), subcategory(B,C).
member(A,[A]|_]).
member(A,[_| R):- member(A,R).
member(A,[A]).
contains(A,B): member(A,B).
contains(A,C): subcategory(C,B), contains(A,B).

Where the base comprises the facts:
subcategory(botanical, trees).
subcategory(botanical, flowers).
subcategory(trees, [maple, fir, beech]).
subcategory(animals, mammals).
subcategory(animals, fishes).
subcategory(fishes, [dolphin, shark]).
subcategory(mammals, cetacine).
subcategory(cetacine, toothed wale).
subcategory(toothed wale, [dolphin, orca]).

To illustrate how the three services collaborate look at the following scenario: Invoking the analysis service with the question "is a dolphin a fish" would invoke the inference service with "contains(fish, dolphin). The inference trace would then

```
       contains(fish, dolphin).
              -> member(fish, dolphin).
              <-No.
              ->subcategory(fish, X), contains(dolphin, X).
              ->X=[dolphin, shark], contains(dolphin, [dolphin, shark])
                   ->member(dolphin, [dolphin, shark])
                   <-Yes
              <-Yes
       <-Yes
```

That would yield by invoking the synthesis service an answer "Yes, a dolphin is a fish.", which is definitely wrong. Suppose now an interactive correction of the previous input to "a dolphin is no fish". By invoking the inference service this would amend the database by reassert subcategory(fishes, [shark]) for subcategory(fishes, [dolphin, shark]). Invoking once more the analysis service would now finally yield a fail from the inference service. This fail would by invoking the synthesis service be translated to the expected " A dolphin is no fish".

The amendment of the database could influence other service invocations. Suppose for instance a question like "what is the category of a dolphin" would previously answered by "animal, fishes, mammals, cetacine, ...." The reassert would now force the service system to amend the given answer to "animal, mammals, cetacine, ....", even without a deep re-computation since only the derivations that are influences by the reassert need to be recomputed. Note further that the synthesis of the given answer need not to be recomputed since only a grammatical cohesive part is changed.

This example shows mainly two advantages of the rollback concept for services: re-computation is minimized and changes of any kind of a part of the system are propagated through the system and through the time.

In advance the backtracking mechanism and the rollback mechanism fits so well that the exchange of information with unifiers, i.e. unifying variable bindings, between multiple inference service objects as the one described above, has a similar semantic with a sole inference machine with one logic base. That means artificial intelligence based applications could be integrated from components transparently by using the method according to the invention.

## Claims

1. A computer software product that comprises service objects (SO1, ..., S04), the service objects are adapted to communicate via messages (M) through a communication platform (P) providing a communication protocol, **characterized in that**
- the communication platform comprising logging means (EL) for logging a service object history (H) by logging an communication event or a service object state or a state change or a service object interaction, and **in that**
- the communication platform comprising control means (CP) for rollback service objects histories (H) consistently by propagating a rollback of a service object to rollback affected service objects until a consistent state is reached.

2. The computer software product according to claim 1, **characterized in that** the protocol is adapted to invalid a computation history by invalidating (1, 2, 3) a message.

3. The computer software product according to claim 1, **characterized in that** an implementation of the computer software product is supported by programming language means for a rollback of a computation.

4. The computer software product according to claim 1, **characterized in that** a run time environment supports an event logging and rollback of a computation.

5. The computer software product according to claim 4, **characterized in that** the run time environment supports learning a recovery point or a recovery strategy alternative.

6. The computer software product according to claim 4, **characterized in that** the run time environment simulates the repetition of valid messages (RM) to optimize re-computation of a service object state and message traffic.

7. A server host **characterized by** comprising a computer software product according to claim 1.

8. A distributed system **characterized by** comprising at least two server hosts according to claim 7.

9. A method for synchronizing service objects (SO1, ..., S04) communicating via messages (M) through a communication platform providing a communication protocol, the method is **characterized by** comprising the steps of
- logging a service object history by logging an communication event or a service object state or a state change or a service object interaction, and by
- rollback service objects histories consistently by propagating a rollback of a service object to rollback affected service objects until a consistent state is reached.

## Amended claims

### Amended claims in accordance with Rule 137(2) EPC.

**1.** A computer software product that comprises service objects (SO1, ..., SO4), the service objects are adapted to communicate via messages (M) through a communication platform (P) providing (5) a communication protocol, **characterized in that**
- the communication platform comprising distributed logging means (EL) for logging a service object history (H) for each service object of the services objects by logging an communication event or a service object state or a state change or a service object interaction of the service object, and **in that**
- the communication platform comprising control means (CP) for rollback service objects histories (H) consistently by propagating a rollback of a service object to rollback affected service objects until a consistent state is reached.

**2.** The computer software product according to claim 1, **characterized in that** the protocol is adapted to invalid a computation history by invalidating (1, 2, 3) a message.

**3.** The computer software product according to claim 1, **characterized in that** the control means are supported by programming language means.

**4.** The computer software product according to claim 1, **characterized in that** a run time environment supports an event logging and rollback of a computation.

**5.** The computer software product according to claim 4, **characterized in that** the run time environment is adapted to adaptate the density of recovery points dependent on the reliability of involved objects.

**6.** The computer software product according to claim 4, **characterized in that** the run time environment simulates the repetition of valid messages (RM) to optimize re-computation of a service object state and message traffic.

**7.** A server host **characterized by** comprising a computer software product according to claim 1.

**8.** A distributed system **characterized by** comprising at least two server hosts according to claim 7.

**9.** A method for rollback-recovery for service objects (SO1, .., S04) that are communicating via messages (M) through a communication platform, the communication platform providing a communication protocol, where the method is **characterized by** comprising the steps of
- logging distributed a service object history of a service object of the services objects by logging an communication event or a service object state or a state change or a service object interaction of the service object, and by
- rollback service objects histories consistently by propagating a rollback of a service object to rollback affected service objects until a consistent state is reached.
